Europäisches Patentamt

(19) European Patent Office

Office européen des brevets

(11) Publication number: **0 076 560**
**B1**

## (12) EUROPEAN PATENT SPECIFICATION

(45) Date of publication of patent specification: **08.10.86**

(51) Int. Cl.⁴: **H 01 B 7/34**

(21) Application number: **82303837.7**

(22) Date of filing: **21.07.82**

(54) **Inside telecommunications cable.**

(30) Priority: **30.09.81 CA 386977**

(43) Date of publication of application:
**13.04.83 Bulletin 83/15**

(45) Publication of the grant of the patent:
**08.10.86 Bulletin 86/41**

(84) Designated Contracting States:
**CH DE FR GB IT LI NL SE**

(56) References cited:
**EP-A-0 002 397**
**GB-A-2 043 326**
**US-A-4 273 829**

**PATENTS ABSTRACTS OF JAPAN,**
**unexamined applications, E-field, vol. 2, no. 86,**
**July 14, 1978 THE PATENT OFFICE JAPANESE**
**GOVERNMENT page 3750 E 78**

(73) Proprietor: **NORTHERN TELECOM LIMITED**
**1600 Dorchester Boulevard West**
**Montreal Quebec H3H 1R1 (CA)**

(72) Inventor: **Checkland, John Anthony**
**113 Forest Gardens**
**Pointe Claire Quebec H9R 3T2 (CA)**
Inventor: **Woytiuk, Leo Victor**
**113 Maywood Road**
**Pointe Claire Quebec H9R 3L7 (CA)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to inside cable.

An inside cable is one which is designed for use inside buildings as distinct from the open air or beneath the ground. Such cable includes power cable, central office cable, station cable, signal cable, service entrance cable, switchboard cable, and telecommunications cable. Inside cable has a requirement which does not apply to buried cable and this is that it needs to have fire retardant properties to prevent the spread of fire through the cable and thus through a building. Some cable, such as telecommunications cable, passes through air ducts and plenums of buildings. In the event of a cable commencing to burn in such a location, unless fire retardant precuations are taken, the eventual fire spread may have disastrous consequences. Also of importance, is the amount of smoke which is generated at a time of fire in a cable. Frequently, lives are lost, not because of the heat of the fire, but as a direct result of the amount and type of smoke issuing from a burning cable and flowing into rooms, stairways and elevator shafts. One way of increasing the fire retardancy and decreasing the smoke output of a cable for inside use is to employ a jacketing material which is itself fire retardant. Thus where a cable for outside use may include a jacket formed from polyethylene, it is essential that the material of greater fire retardancy is used for inside cable such as one having a polyvinylchloride composition. A problem with any fire retardant is, however, that the jacketing material is not completely fire proof. One reason for this is the use of plasticizer in the jacketing composition. Such a jacketing material will not combust under certain conditions of temperature, but may only be effective in retarding the spread of fire after burning commences. Hence a jacket formed basically from a polyvinylchloride composition may burn if the temperature of the jacketing material exceeds a specific temperature and will then produce smoke which may be a serious hazard.

It would be an advantage to provide an inside cable and method for making it in which the flame retardancy is increased beyond that made available by the use of a flame retardant jacket material.

Japanese Patent Applications 53-50435 and 53-50484 both disclose cable structures which comprise a core of insulated conductors, an outer sheath and an interposition of extruded material interposed between the core and the outer sheath. The extruded material is composed of a maximum of 80% by weight of fire retardant powder, which gives the cable flame retardant properties. However, the extruded material also contains other substances including a substantial amount of plasticiser which may assist in flame spreading rather than retardation.

British Patent Specification No. GB 2043326A discloses a cable comprising a cable core surrounded by a metal jacket with a powder filling material therebetween for flame retardation.

The present invention is concerned with an inside cable having an outer jacket formed of a plastics polymer material for economy and ease of installation. However the problem with a plastics polymer material is principally lack of resistance to fire. As stated above, the solution offered by Japanese Patent Applications 53-50435 and 53-50484 is not satisfactory and does not retard flame propagation sufficiently.

It is therefore an object of the invention to provide an inside cable having an outer jacket of a plastics polymer material with improved flame retardation properties.

The present invention provides a fire retardant inside cable comprising a jacket (15) surrounding a core (12) with a flame retardant powder material therebetween, the core comprising a plurality of insulated conductors (14) in which the insulation is formed from a compound based on polyvinylchloride, characterized in that:—

a) the jacket is constituted by a fluorine based polymer; and

b) the intersticies between the conductors and between the conductors and the jacket being filled with a material which is constituted solely by a fire resistant hydrated inorganic powder.

The reason for the flame retardant powder material used in accordance with the invention assisting in the prevention of flame spread is not clearly understood but it is thought that there is a combination of factors which minimizes the flame spread. For instance, it is considered that retardant powder restricts the flow of any plasticiser which may be present down the inside surface of the jacket material which in many inside telecommunication cable constructions is a loose fit upon the core. Further to this, it is felt that the flame retardant powder transfers the heat from the initially localized burning area into the powder, whereby the heat available for promoting flame spread along the jacket is dissipated. A further reason is that the location of the powder immediately within the jacket displaces oxygen which would be otherwise available for the promotion of combustion and hence it is extremely difficult for the flame spread to occur down the inside of the tube. The immediate location of the powder also means that the insulated conductors on the outside of the core have a covering of powder and this increases the difficulty for flame to spread from the jacket onto the insulation of the conductors themselves. There is the added advantage, of course, that the smoke output is reduced substantially when the flame spread is minimized by the presence of the powder which also effectively douses the flame.

In addition, the use of hydrated inorganic powder, causes a cooling action upon the burning area as the heat releases the water of hydration which also acts directly to douse the flames.

The fire retardant material used for the jacket is a fluorinated material which minimizes the flame spread to a more localized area than is possible with e.g. polyvinylchloride. The smoke output from a fluorinated material is significantly less than is obtained with polyvinylchloride.

An embodiment of the present invention will now be described, by way of example, with reference to the accompanying drawing which is a cross-sectional view through a cable forming an embodiment.

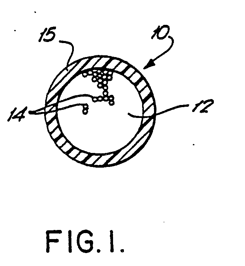

In an inside telecommunication cable 10, as shown in Figure 1, a core 12 is formed from a plurality of pairs of electrical conductors 14 insulated with a polyvinylchloride composition and which have been twisted together and bound with a binding tape (not shown) in conventional manner. Surrounding the core 12 is a jacket 15 of extruded polymeric material which is, in fact a flame retardant material of polyvinylidene fluoride composition as sold under the trademark "KYNAR"®.

The cable core has its insterstices between the insulated conductors filled with a flame retardant powder which is 100% hydrated alumina powder of 0.3 µm size.

A sample of the cable according to the embodiment (designated 'D' in the following table) was tested for flame spread conditions by causing a localised area of the cable to commence burning at a temperature of around 550°C.

The test was conducted in a Steiner tunnel under normal flame spread and smoke rating test conditions according to the test standards of Underwriter's Laboratory. The flame spread and smoke rating characteristics were compared with a sample of the same cable structure but with a polyvinylchloride jacket and in which no flame retardant powder was used. This latter sample is designated 'A' in the following table. Then a comparison was made with further samples of the same cable structure in which the jacket was of polyvinylchloride composition and the powder used was 100% calcium carbonate ('B' in the table) and then in sample 'C' a cable using 100% hydrated alumina, and with a jacket of polyvinylchloride composition. All the samples were tested under the same test standards.

The flame spread distances and smoke quantity scales according to criteria laid down by Underwriter's Laboratory were as follows.

| Cable structure | Flame Spread (ft) | Smoke scale |
|---|---|---|
| A. Cable devoid of powder | 14 | 3.5 |
| B. Cable and calcium carbonate powder | 14 | 1.75 |
| C. Cable and hydrated alumina powder | 14 | 1.00 |
| D. Cable and polyvinylidene flouride jacket (+C) | 4 | 0.75 |

As may be seen from the above test results, in cable A which was devoid of powder in the interstices between conductors, the flame spread from the point of heat application was 14 feet. This was accompanied by a smoke reading of 3.5.

Cable B having exactly the same cable structure as A but with the addition of calcium carbonate powder had substantially the same flame spread as cable A. It is significant, however, that the smoke reading of 1.75 for cable B is half that for cable A, thus indicating that the presence of the powder cut down substantially on the smoke emissions. Cable C also had a flame spread of 14 feet, but the smoke emissions were further reduced as is shown by the smoke reading of 1.00.

Cable D is significantly superior to cables A, B and C, not only because it further, reduced the smoke emissions, but also because it reduced, in impressive fashion, the flame spread distance to 4 feet.

The above tests show that when a flame retardant powder is used to fill the interstices in telecommunications cable, then immediately, a significant drop in smoke emissions result, thereby decreasing the possibility of fatalities being caused through smoke content in a fire even though the actual flame spread may be similar as in samples A, B and C. The actual reduction in smoke emissions is dependent upon the type of powder used. In addition, the type of jacket used will also increase resistance to flame spread as is clear when a polyvinylidene fluoride jacket was used in cable D. Flame spread in this case was below 300% of that in the other cables.

In the sample D tested, it is believed that the presence of the powder prevented the plasticizer in the polyvinylchloride from progressing down the inside of the jacket material, and, as plasticizer tends to detract from the flame retardant characteristics of the jacket, then avoidance of flow of a plasticizer assists in minimizing the flame spread. Further, it is believed that the heat in the burning area is absorbed by the powder thus minimizing the amount of heat available to promote flame spread into adjacent areas of the jacket. The oxygen available to promote combustion is also reduced by the replacement of oxygen within the interstices of the core with the powder which also covers the outer insulated conductors, thus reducing the chance of flame spread to the insulation on the conductors themselves.

The cable according to the examples B, C and D is made by manufacturing the core, complete with its interstices filled with powder, and then enclosing the core within the jacket by a conventional jacket extrusion process. The powder may be added to the core in various ways for instance as described in U.S. Patent No. 4,100,002 entitled "Method For Producing Powder Filled Cable", granted July 11, 1978 to L.E. Woytiuk, R.Y. Mayer and G.B. Kepes.

## Claims

1. A fire retardant inside cable comprising a jacket (15) surrounding a core (12) with a flame retardant powder material therebetween, the core comprising a plurality of insulated conductors (14) in which the insulation is formed from a compound based on polyvinylchloride characterized in that:—

a) the jacket is constituted by a fluorine based polymer; and

b) the interstices between the conductors and between the conductors and the jacket being filled with a material which is constituted solely by a fire resistant hydrated inorganic powder.

2. A cable according to claim 1, wherein said powder comprises alumina trihydrate powder.

## Patentansprüche

1. Feuerhemmendes Innenkabel, umfassend einen Mantel (15), der einen Kern (12) umgibt, mit einem flammenhemmenden Pulvermaterial hierzwischen, wobei der Kern eine Vielzahl von isolierten Leitern (14) umfaßt, bei denen die Isolierung aus einer Verbindung auf Polyvinylchloridbasis gebildet ist, dadurch gekennzeichnet, daß

a) der Mantel aus einem Polymeren auf Fluorbasis gebildet wird; und

b) die Zwischenräume zwischen den Leitern und zwischen den Leitern und dem Mantel mit einem Material gefüllt sind, welches nur durch ein feuerbeständiges, hydratisiertes, anorganisches Pulver gebildet wird.

2. Kabel nach Anspruch 1 dadurch gekennzeichnet, daß das Pulver Aluminiumoxidtrihydratpulver umfaßt.

## Revendications

1. Câble ignifuge pour pose en bâtiment comprenant une gaine (15) entourant une âme (12), un matériau ignifuge en poudre étant placé entre elles, l'âme comportant une multitude de conducteurs isolés (14) dans lesquels l'isolant est constitué d'un composé basé sur du chlorure de polyvinyle, caractérisé en ce que:

a) là gaine est en polymère à base de fluor, et

b) les interstices entre les conducteurs et entre les conducteurs et la gaine sont remplis d'une matériau qui est constitué seulement d'une poudre minérale hydratée, ignifuge.

2. Câble selon la revendicaion 1, dans lequel la poudre est constituée de poudre de trihydrate d'alumine.

FIG. I.